# EUROPÄISCHE PATENTSCHRIFT

(11) **EP 0 871 032 B1**
(45) Veröffentlichungstag und Bekanntmachung des Hinweises auf die Patenterteilung: **21.02.2007**
(21) Anmeldenummer: 98105724.3
(22) Anmeldetag: 30.03.1998
(51) Int. Cl.: G01N 27/407, G01N 27/12

(54) **Abgassondenanschlussleitung**
Exhaust gas sensor connecting cable
Câble de connexion d'un capteur de gaz d'échappement

(30) Priorität: 11.04.1997 DE 19715305; 16.04.1997 DE 19715854
(43) Veröffentlichungstag der Anmeldung: 14.10.1998
(73) Patentinhaber: Volkswagen Aktiengesellschaft, 38436 Wolfsburg (DE)
(72) Erfinder: Meyer, Wolfgang, 38364 Esbeck (DE); Köpcke, Ralf, Dipl.-Ing., 38543 Hillerse (DE)

(56) Entgegenhaltungen:
- US-A- 4 151 503
- US-A- 4 288 774
- PATENT ABSTRACTS OF JAPAN vol. 181, no. 510 (P-1804), 26.September 1994 & JP 61 074941 A (ISHIDA HIDETOSHI)

## Beschreibung

Die Erfindung betrifft den stationären Verbau einer Abgassonde am Abgasstrang eines Kraftfahrzeugs gemäß dem Oberbegriff des Anspruchs 1 bzw. des Anspruchs 16.

Bei Abgassonden, insbesondere Lambdasonden besteht eine erhebliche Typenvielfalt, die teils schon nur durch unterschiedliche Kabellängen der Abgassondenanschlußleitung bedingt ist. Weitere Typenvielfalten werden durch unterschiedliche Anschlußstecker und beispielsweise Hitzeabschirmungen erreicht.

Aufgabe der vorliegenden Erfindung ist es, Abgassonden so auszugestalten, daß man bei unterschiedlichen Kraftfahrzeugen mit einer geringeren Typenvielfalt auskommt. Aufgabe ist fernerhin ein entsprechendes Montageverfahren für Abgassonden.

Die Erfindung wird gelöst mit den Merkmalen des Anspruchs 1 bzw. den Maßnahmen des Anspruchs 16.

Die Unteransprüche beschreiben bevorzugte Ausführungsformen, die insbesondere eine sichere Anbringung der Anschlußleitung betreffen.

Mit der vorliegenden Erfindung wird erreicht, daß die Abgassonden, insbesondere Lambdasonden, für unterschiedliche Kraftfahrzeugtypen, wobei der Unterschied bereits alleine im Aufbau der Abgasanlage liegen kann, nicht mit einer Vielzahl unterschiedlicher Anschlußleitungen zur Verfügung gestellt werden müssen, sondern daß man im wesentlichen mit einer einzigen Abgassondenanschlußleitung auskommt, die im ursprünglichen Zustand kürzer als oder der kürzeste notwendige Leitungsabschnitt ist. Durch einfaches Ziehen an den Enden der Abgassondenanschlußleitung wird deren wirksame Länge dadurch verlängert, daß ein Leitungsabschnitt aus einem Reservebereich herausgezogen wird. Dieses Auseinanderziehen der Anschlußleitung kann beispielsweise unmittelbar vor der Montage erfolgen, so daß keine Logistik hinsichtlich der unterschiedlichen Anschlußleitungslängen erforderlich ist.

Der Reservebereich ist hierfür vorteilhaft so aufgebaut, daß in ihm der herauszuziehende Leitungsabschnitt gewickelt und/oder gefaltet vorliegt. Die gewickelten und/oder gefalteten Bereiche des Leitungsabschnitts werden hierbei materialschlüssig, d. h. beispielsweise durch eine aufreißbare Verschweißung oder Verklebung der Ummantelungen, und/oder reibschlüssig, d. h. beispielsweise durch Einklemmen, miteinander verbunden.

Ganz besonders vorteilhaft ist der Reservebereich, aus dem der Leitungsabschnitt herausgezogen werden kann, als eine Kammer ausgebildet, beispielsweise als ein Rohr oder ein Schlauch. In dieser Kammer liegt dann der herauszuziehende Leitungsabschnitt vorzugsweise reibschlüssig gehalten, insbesondere gewickelt und/oder gefaltet vor. Ein Schlauch hat hierbei den Vorteil, daß auch der Reservebereich ein gewisse Flexibilität aufweist. Außerdem kann der Schlauch beispielsweise als Schrumpfschlauch ausgebildet sein, so daß einerseits durch ein Schrumpfen des Schlauchs der hineingewickelte bzw. hineingefaltete Teil der Leitung reibschlüssig gehalten wird und/oder zum anderen nach der Entnahme des gewünschten Leitungsabschnitts der Schrumpfschlauch weiter geschrumpft werden kann, wodurch insbesondere eine Sicherung des in dem Reservebereich verbliebenen Leitungsabschnitts gegen ein Herausziehen erreicht wird. Die Kammer, beispielsweise der Schlauch, kann hierbei auch als Hitzeabschirmung ausgebildet sein, beispielsweise als Hitzeschutzgewebe bzw. auch in Form eines Wellflexschlauches oder -rohres, das vorteilhaft aus einem Metall, insbesondere aus Aluminium gefertigt sein kann.

Wie schon erwähnt, kann der im Reservebereich verbliebene Teil des flexiblen Leitungsabschnitts gegen eine weitere Entnahme gesichert werden bzw. sein, so daß nach der Montage am Kraftfahrzeug keine unbeabsichtigte Verlängerung mehr erfolgen kann. Eine solche Absicherung erfolgt beispielsweise durch Anbringen einer Klemme, eines Kabelbinders oder durch Einsatz eines Klebers bzw. - wie oben bereits beschrieben - mittels eines Schrumpfschlauches. Der Schrumpfschlauch kann beispielsweise nach der gewünschten Verlängerung der Anschlußleitung durch Erwärmung geschrumpft werden, so daß der in dem Reservebereich verbliebene Leitungsabschnitt nicht mehr so leicht herausgezogen werden kann. Der Klebstoff kann bereits vor oder auch nach dem Herausziehen des Leitungsabschnitts eingebracht sein bzw. werden, wobei vorteilhaft feuchtigkeits- oder wärmeaushärtende Klebstoffe verwendet werden. Eine Wärmeaushärtung kann durch die Verlegung nahe des Abgasstrangs erreicht werden.

Die Abgassondenanschlußleitung ist mit ihrem einen Ende vorgesehen zur Verbindung oder bereits fest mit einer Abgassonde verbunden, das andere Ende ist ausgebildet um mit einer sich an Bord des Kraftfahrzeugs befindlichen elektrischen Einrichtung verbunden zu werden, hierzu ist das Ende vorteilhaft mit einer Steckverbindung versehen. Die Abgassonde selbst wird bzw. ist fest in der Abgasanlage integriert, insbesondere eingeschraubt. Die Lage der Abgassonde ist hierbei meist so, daß sie sich in der Nähe, d. h. insbesondere nicht weiter als 50 cm entfernt, des Katalysators befindet; insbesondere ist die Abgassonde stromaufwärts des Katalysators angeordnet. Als Abgassonde kommen vorzugsweise eine Lambda-, HC- bzw. NOx-Sonde zum Einsatz.

Das Herausziehen der Leitung aus dem Reservebereich erfolgt am einfachsten von Hand, wobei das Auseinanderziehen beispielsweise an einer Längenschablone erfolgen kann. Besonders vorteilhaft sind jedoch an dem herauszuziehenden Leitungsabschnitt eine oder mehrere Markierungen angebracht, die beim Herausziehen aus dem Reservebereich sichtbar werden. Die Markierungen können beispielsweise auch ein Code sein. Hieran kann der den Leitungsabschnitt herausziehende Werker das Erreichen der gewünschten Länge ablesen.

Die Anschlußleitung kann vorzugsweise auch mit Markierungen und/oder Vorrichtungen zur Festlegung eines Leitungsabschnitts an dem Aufbau des Kraftfahrzeuges versehen sein. Solche Vorrichtungen können beispielsweise eine Hülse, Schelle oder ähnliches sein, über die die Befestigung erfolgt. Markierungen dienen beispielsweise dem Ansatz einer Schelle oder Klemme.

Der Reservebereich, aus dem die Verlängerung der Anschlußleitung erfolgt, kann grundsätzlich an jeder Stelle der Anschlußleitung liegen. Wenn der Reservebereich sich nicht in einem Wärmeabschirmmittel, das im Bereich der Sonde liegt, angeordnet ist, dann ist er vorteilhafterweise in einem mittleren Bereich und insbesondere an dem Endbereich der Anschlußleitung vorgesehen, der mit der elektrischen Einrichtung verbunden wird. Hierdurch wird eine hohe Stabilität der Anschlußleitung erreicht.

Die Anschlußleitung hat üblicherweise ein bis sechs Pole, wobei meist vier Pole zum Einsatz kommen. Der Einsatz einer abgeschirmten Anschlußleitung ist vorteilhaft, insbesondere um eine Induktionswirkung der gewickelten bzw. gefalteten Leitung zu vermeiden oder zu vermindern.

Die Erfindung betrifft auch ein Verfahren zum Anbringen einer Abgassonde und einer Abgassondenanschlußleitung, die vor oder während der Montage durch Auseinanderziehen verlängert wird. Bei dem Verfahren kommen die oben beschriebenen Merkmale bzw. Maßnahmen einzeln oder in Kombination zum Einsatz.

Die Erfindung wird im folgenden anhand von Zeichnungen eines Ausführungsbeispiels näher beschrieben.

Es zeigen:
- Figur 1: eine Lambdasonde mit Anschlußleitung im ursprünglichen Zustand; und
- Figur 2: die Lambdasonde mit Anschlußleitung im verlängerten Zustand.

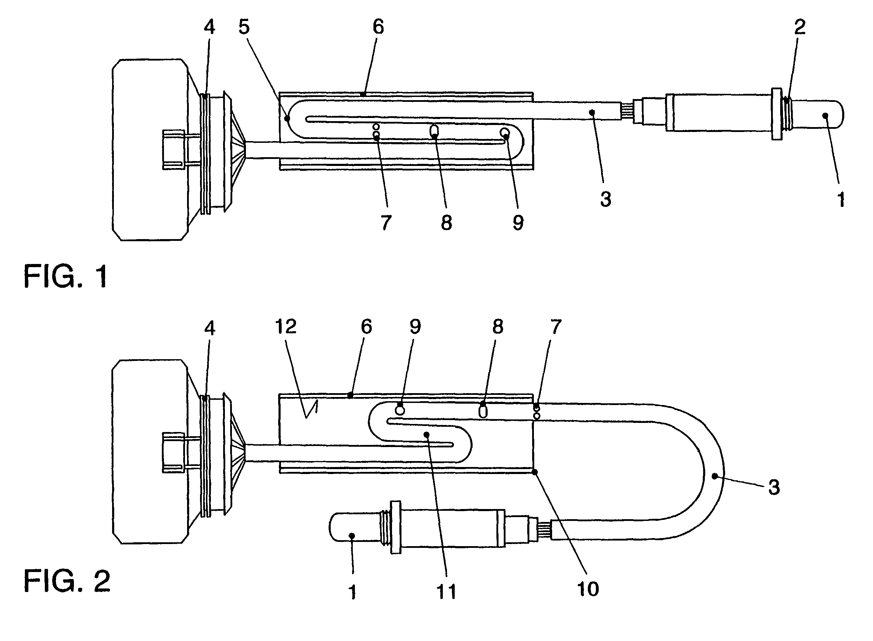

In Figur 1 ist eine Lambdasonde 1, die mit einem Gewinde 2 in eine Abgasleitung eines Kraftfahrzeuges einschraubbar ist, mit anpaßbarer Kabellänge dargestellt. Die Abgassonde 1 ist hierzu mit einer Anschlußleitung 3 verbunden, die an ihrem anderen Ende mit einem Stecker 4 versehen ist, der zum Anschluß der Lambdasonde 1 an eine elektronische Steuerung der Verbrennungskraftmaschine dient. Ein Großteil der Anschlußleitung 3 liegt gefaltet 5 in einem Schrumpfschlauch 6, so daß die in Figur 1 dargestellte angelieferte Länge der Gesamteinheit vom Stecker 4 bis zur Lambdasonde 1 verhältnismäßig kurz ist. In diesem Zustand ist die Lambdasonde in einer ersten Ausführung eines Kraftfahrzeuges verbaubar. Für den Verbau der Lambdasonden in weiteren anders gestalteten Kraftfahrzeugen sind Markierungen 7 bis 9 vorgesehen.

Zur Verlängerung wird die Anschlußleitung 3 (Fig. 2) von Hand oder maschinell aus dem Schrumpfschlauch 6 herausgezogen, bis beispielsweise die Markierung 7 am Rand 10 des Schrumpfschlauchs 6 sichtbar wird. Hierzu ist erforderlich, daß das mit dem Stecker 4 versehene Ende der Anschlußleitung 3 nicht ebenfalls aus dem Schrumpfschlauch 6 herausgezogen wird. Sobald die Markierung 7 sichtbar wird, ist eine weitere gewünschte Verbaulänge für die Lambdasonde 1 erreicht; entsprechendes gilt für die weiteren Markierungen 8 und 9. Zur Sicherung des in dem Schrumpfschlauch 6 verbliebenen gefalteten Teils 11 der Anschlußleitung 3 kann der Schrumpfschlauch durch Hitzeeinwirkung geschrumpft werden, wodurch er sich, ggf. unterstützt durch eine an der Innenseite des Schrumpfschlauchs angebrachte Schmelzklebeschicht 12, fest um den Anschlußleitungsbereich 11 legt und diesen gegen ein weiteres Herausziehen (Verlängerung der Anschlußleitung) schützt.

Gemäß der vorliegenden Erfindung können gleichartige Lambdasonden 1 mit gleichartigen Steckern 4 bei unterschiedlichen Anschlußleitungslängen verbaut werden.

## Patentansprüche

1. Abgassondenanschlußleitung mit einem flexiblen Leitungsabschnitt, der einen Ends ausgebildet ist zum Anschluß einer Abgassonde und anderen Ends zum Anschluß an eine elektrische Einrichtung, **dadurch gekennzeichnet, daß** der mit den ausgebildeten Enden versehene flexible Leitungsabschnitt zumindest teilweise in einem die wirksame Länge des flexiblen Leitungsabschnitts verkürzenden Reservebereich angeordnet ist, aus dem er zum Erreichen einer gewünschten wirksamen Länge entnehmbar ist.

2. Abgassondenanschlußleitung nach Anspruch 1, **dadurch gekennzeichnet, daß** mindestens eines der ausgebildeten Enden, insbesondere das zum Anschluß an eine elektrische Einrichtung ausgebildete Ende, als Steckverbindung ausgebildet ist.

3. Abgassondenanschlußleitung nach Anspruch 1 oder 2, **dadurch gekennzeichnet, daß** die Abgassonde fest mit dem zugehörigen Ende verbunden ist.

4. Abgassondenanschlußleitung nach einem der vorhergehenden Ansprüche, **dadurch gekennzeichnet, daß** die Abgassonde fest in einer Abgasanlage anbringbar oder angebracht ist.

5. Abgassondenanschlußleitung nach einem der vorhergehenden Ansprüche, **dadurch gekennzeichnet, daß** der flexible Leitungsabschnitt in den Reservebereich gewickelt und/oder gefaltet ist oder war.

6. Abgassondenanschlußleitung nach Anspruch 5, **dadurch gekennzeichnet, daß** der in den Reservebereich gewickelte oder gefaltete Bereich zumindest teilweise materialschlüssig und/oder reibschlüssig miteinander verbunden ist.

7. Abgassondenanschlußleitung nach einem der vorhergehenden Ansprüche, **dadurch gekennzeichnet, daß** der Reservebereich eine Kammer, insbesondere ein Rohr oder Schlauch ist.

8. Abgassondenanschlußleitung nach einem der vorhergehenden Ansprüche, **dadurch gekennzeichnet, daß** ein in dem Reservebereich verbliebener Teil des flexiblen Leitungsabschnitts gegen eine unwillkürliche Entnahme sicherbar oder gesichert ist.

9. Abgassondenanschlußleitung nach einem der vorhergehenden Ansprüche, **dadurch gekennzeichnet, daß** die Abgassonde eine Lambda-, HC- und/oder NOx-Sonde ist.

10. Abgassondenanschlußleitung nach einem der vorhergehenden Ansprüche, **dadurch gekennzeichnet, daß** die Abgassonde in der Nähe eines Katalysators und/oder stromaufwärts des Katalysators anbringbar angebracht ist.

11. Abgassondenanschlußleitung nach einem der vorhergehenden Ansprüche, **dadurch gekennzeichnet, daß** der in dem Reservebereich angeordnete Leitungsabschnitt mit einer oder mehreren Markierungen versehen ist, die beim Entnehmen des Leitungsabschnitts aus dem Reservebereich die gewünschte wirksame Länge signalisieren.

12. Abgassondenanschlußleitung nach Anspruch 11, **dadurch gekennzeichnet, daß** an mindestens einer der Markierungen auch ein Code angebracht ist.

13. Abgassondenanschlußleitung nach einem der vorhergehenden Ansprüche, **dadurch gekennzeichnet, daß** an dem Leitungsabschnitt eine oder mehrere Markierungen oder Vorrichtungen zur Festlegung des Leitungsabschnitts an einem Aufbau vorgesehen sind.

14. Abgassondenanschlußleitung nach einem der vorhergehenden Ansprüche, **dadurch gekennzeichnet, daß** der Reservebereich in einem mittleren Bereich des Leitungsabschnitts oder an dem Endbereich zum Anschluß an eine elektrische Einrichtung vorgesehen ist.

15. Abgassondenanschlußleitung nach einem der vorhergehenden Ansprüche, **dadurch gekennzeichnet, daß** die Leitung ein- bis sechspolig, insbesondere drei- bis fünfpolig ist.

16. Verfahren zum Anbringen einer Abgassonde an einer Abgaseinrichtung eines Kraftfahrzeuges und Verbinden der Abgassonde mit einer an Bord des Kraftfahrzeuges befindlichen elektrischen Einrichtung mittels einer Abgassondenanschlußleitung, die einen flexiblen Leitungsabschnitt aufweist, der einen Ends ausgebildet ist zum Anschluß der Abgassonde oder die Abgassonde aufweist und anderen Ends zum Anschluß an eine elektrische Einrichtung oder mit der elektrischen Einrichtung verbunden ist, **dadurch gekennzeichnet, daß** der flexible Leitungsabschnitt zumindest teilweise in einen die wirksame Länge des flexiblen Leitungsabschnitts verkürzenden Reservebereich angeordnet ist, aus dem er bis zum Erreichen einer gewünschten Länge entnommen wird um anschließend an dem Kraftfahrzeug verbaut zu werden.

## Claims

1. Exhaust gas sensor connecting cable having a flexible line section which is designed at one end to connect to an exhaust gas sensor and at the other end to connect to an electrical device, **characterized in that** the flexible line section which is provided with the formed ends is arranged at least partially in a reserve region which shortens the effective length of the flexible line section and from which it can be removed in order to provide a desired effective length.

2. Exhaust gas sensor connecting cable according to Claim 1, **characterized in that** at least one of the formed ends, in particular the end designed for connection to an electrical device, is embodied as a plug-type connection.

3. Exhaust gas sensor connecting cable according to Claim 1 or 2, **characterized in that** the exhaust gas sensor is permanently connected to the associated end.

4. Exhaust gas sensor connecting cable according to one of the preceding claims, **characterized in that** the exhaust gas sensor can be or is permanently mounted in an exhaust system.

5. Exhaust gas sensor connecting cable according to one of the preceding claims, **characterized in that** the flexible line section is or was wound and/or folded into the reserve region.

6. Exhaust gas sensor connecting cable according to Claim 5, **characterized in that** the region which is wound or folded into the reserve region is connected to one another at least partially in a materially joined and/or frictionally locking fashion.

7. Exhaust gas sensor connecting cable according to one of the preceding claims, **characterized in that** the reserve region is a chamber, in particular a pipe or a hose.

8. Exhaust gas sensor connecting cable according to one of the preceding claims, **characterized in that** part of the flexible line section which remains in the reserve region can be secured or is secured against unintentional removal.

9. Exhaust gas sensor connecting cable according to one of the preceding claims, **characterized in that** the exhaust gas sensor is a lambda sensor, HC sensor and/or NOx sensor.

10. Exhaust gas sensor connecting cable according to one of the preceding claims, **characterized in that** the exhaust gas sensor can be mounted or is mounted in the vicinity of a catalytic converter and/or upstream of the catalytic converter.

11. Exhaust gas sensor connecting cable according to one of the preceding claims, **characterized in that** the line section which is arranged in the reserve region is provided with one or more marks which signal the desired effective length when the line section is removed from the reserve region.

12. Exhaust gas sensor connecting cable according to Claim 11, **characterized in that** a code is also provided on at least one of the marks.

13. Exhaust gas sensor connecting cable according to one of the preceding claims, **characterized in that** one or more marks or devices for securing the line section to a structure are provided on the line section.

14. Exhaust gas sensor connecting cable according to one of the preceding claims, **characterized in that** the reserve region is provided in a central region of the line section or at the end region for connection to an electrical device.

15. Exhaust gas sensor connecting cable according to one of the preceding claims, **characterized in that** the line has one to six poles, in particular three to five poles.

16. Method for mounting an exhaust gas sensor on an exhaust device of a motor vehicle and connecting the exhaust gas sensor to an electrical device which is located on board the motor vehicle, by means of an exhaust gas sensor connecting cable which has a flexible line section which is designed at one end to connect to the exhaust gas sensor or has the exhaust gas sensor, and at the other end to connect to an electrical device or is connected to the electrical device, **characterized in that** the flexible line section is arranged at least partially in a reserve region which shortens the effective length of the flexible line section and from which it can be removed in order to provide a desired length for subsequent installation on the motor vehicle.

## Revendications

1. Câble de raccordement pour sonde de gaz d'échappement comprenant une section de câble souple dont une extrémité est façonnée pour être raccordée à une sonde de gaz d'échappement et l'autre extrémité pour être raccordée à un dispositif électrique, **caractérisé en ce que** la section de câble souple munie des extrémités façonnées est disposée au moins partiellement dans une zone de réserve qui raccourcit la longueur efficace de la section de câble souple et de laquelle elle peut être extraite pour atteindre une longueur efficace souhaitée.

2. Câble de raccordement pour sonde de gaz d'échappement selon la revendication 1, **caractérisé en ce qu'**au moins l'une des extrémités façonnées, notamment l'extrémité façonnée pour être raccordée à un dispositif électrique, est façonnée sous la forme d'un connecteur.

3. Câble de raccordement pour sonde de gaz d'échappement selon la revendication 1 ou 2, **caractérisé en ce que** la sonde de gaz d'échappement est reliée à demeure avec l'extrémité correspondante.

4. Câble de raccordement pour sonde de gaz d'échappement selon l'une des revendications précédentes, **caractérisé en ce que** la sonde de gaz d'échappement peut être ou est montée à demeure dans un système de gaz d'échappement.

5. Câble de raccordement pour sonde de gaz d'échappement selon l'une des revendications précédentes, **caractérisé en ce que** la section de câble souple dans la zone de réserve est ou était enroulée et/ou pliée.

6. Câble de raccordement pour sonde de gaz d'échappement selon la revendication 5, **caractérisé en ce que** la zone enroulée ou pliée dans la zone de réserve est reliée l'une avec l'autre au moins partiellement par engagement de matériau et/ou par friction.

7. Câble de raccordement pour sonde de gaz d'échappement selon l'une des revendications précédentes, **caractérisé en ce que** la zone de réserve est une chambre, notamment un tube ou un tuyau.

8. Câble de raccordement pour sonde de gaz d'échappement selon l'une des revendications précédentes, **caractérisé en ce qu'**une partie de la section de câble souple qui demeure dans la zone de réserve peut être ou est protégée contre un retrait involontaire.

9. Câble de raccordement pour sonde de gaz d'échappement selon l'une des revendications précédentes, **caractérisé en ce que** la sonde de gaz d'échappement est une sonde Lambda, HC et/ou NOx.

10. Câble de raccordement pour sonde de gaz d'échappement selon l'une des revendications précédentes, **caractérisé en ce que** la sonde de gaz d'échappement peut être ou est montée à proximité d'un catalyseur et/ou en aval du catalyseur.

11. Câble de raccordement pour sonde de gaz d'échappement selon l'une des revendications précédentes, **caractérisé en ce que** la section de câble disposée dans la zone de réserve est munie d'un ou de plusieurs marquages qui indiquent la longueur efficace souhaitée lors du retrait de la section de câble hors de la zone de réserve'.

12. Câble de raccordement pour sonde de gaz d'échappement selon la revendication 11, **caractérisé en ce qu'**un code est également appliqué sur au moins l'un des marquages.

13. Câble de raccordement pour sonde de gaz d'échappement selon l'une des revendications précédentes, **caractérisé en ce qu'**un ou plusieurs marquages ou dispositifs destinés à amarrer la section de câble sur une structure sont prévus sur la section de câble.

14. Câble de raccordement pour sonde de gaz d'échappement selon l'une des revendications précédentes, **caractérisé en ce que** la zone de réserve est prévue dans une zone centrale de la section de câble ou à la zone d'extrémité destiné à être raccordée à un dispositif électrique.

15. Câble de raccordement pour sonde de gaz d'échappement selon l'une des revendications précédentes, **caractérisé en ce que** le câble comprend de un à six pôles, de préférence de trois à cinq pôles.

16. Procédé pour monter une sonde de gaz d'échappement sur un dispositif de gaz d'échappement d'un véhicule automobile et pour raccorder la sonde de gaz d'échappement à un dispositif électrique qui se trouve à bord du véhicule automobile au moyen d'un câble de raccordement pour sonde de gaz d'échappement, lequel présente une section de câble souple dont une extrémité est façonnée pour être raccordée à la sonde de gaz d'échappement ou présente la sonde de gaz d'échappement et l'autre extrémité est façonnée pour être raccordée à un dispositif électrique ou est reliée avec le dispositif électrique, **caractérisé en ce que** la section de câble souple est au moins partiellement disposée dans une zone de réserve qui raccourcit la longueur efficace de la section de câble souple et de laquelle elle est extraite jusqu'à atteindre une longueur souhaitée pour ensuite être montée sur le véhicule automobile.
